Europäisches Patentamt

(19) European Patent Office

Office européen des brevets

(11) Numéro de publication: **0 186 545 B1**

(12) **FASCICULE DE BREVET EUROPEEN**

(45) Date de publication du fascicule du brevet:
24.05.89

(51) Int. Cl.⁴: **B 01 D 33/04**

(21) Numéro de dépôt: 85402271.2

(22) Date de dépôt: 22.11.85

(54) **Dispositif d'étanchéité entre bande convoyeuse et boîte collectrice à un ou plusieurs compartiments d'un filtre à bande sous vide.**

(30) Priorité: 23.11.84 FR 8417916

(43) Date de publication de la demande:
02.07.86 Bulletin 86/27

(45) Mention de la délivrance du brevet:
24.05.89 Bulletin 89/21

(84) Etats contractants désignés:
**DE GB IT SE**

(56) Documents cités:
**DE-C- 946 979**
**FR-A- 880 582**
**FR-A- 957 233**
**FR-E- 47 144**
**GB-A- 642 556**
**GB-A- 909 512**
**US-A- 2 963 161**

(73) Titulaire: **Gaudfrin, Guy, 6, allée du Bec de Canard Golf de Saint-Nom-la-Bretéche,
F-78860 Saint-Nom-la-Bretéche (FR)**

(72) Inventeur: **Gaudfrin, Guy, 6, allée du Bec de Canard Golf de Saint-Nom-la-Bretéche,
F-78860 Saint-Nom-la-Bretéche (FR)**

(74) Mandataire: **Clanet, Denis et al, Cabinet Beau de Loménie 55, rue d'Amsterdam, F-75008 Paris (FR)**

## Description

La présente invention concerne un dispositif d'éthanchéité entre bande convoyeuse et boîte collectrice à un ou plusieurs compartiments d'un filtre a bande sous vide.

Les filtres à bande sous vide comportent au moins une bande convoyeuse sans fin, supportée par deux tambours et entraînée par l'un d'eux. Cette bande convoyeuse est dotée de canaux transversaux perforés de trous dans la partie centrale.

Sur le brin supérieur de la bande convoyeuse, ces canaux sont couverts d'une toile ou d'un média filtrant à travers lequel les filtrats sont aspirés et sur lequel un gâteau se forme. Ils sont mis en communication permanente avec une boîte collectrice sous vide par les trous situés en leur centre.

Le vide applique la bande convoyeuse sur la boîte collectrice fixe assurant ainsi l'étanchéité mais en créant une friction entre les surfaces en contact.

On a toujours recherché à réduire cette friction, donc l'usure et la puissance d'entraînement de la bande convoyeuse, en utilisant des matériaux à faible coefficient de frottement, en lubrifiant les surfaces en contact, en réduisant au minimum l'ouverture de la boîte sous vide.

On rencontre dans certains filtres connus des bandes convoyeuses dotées de bandes dites d'usure ou de glissement que l'on appellera ici «bandes de friction» faisant partie de la bande convoyeuse ou rapportées sur celle-ci par collage. Quand la bande de friction est rapportée par collage, il en existe soit deux, de part et d'autre des trous des canaux, ou une seule perforée de la même façon que la bande convoyeuse.

Dans d'autres filtres connus, on utilise 2 bandes de friction parallèles qui ne sont pas solidaires de la bande convoyeuse mais sont entraînées par elles et guidées par les pièces d'usure ou de glissement fixées sur la boîte de chaque côté de son ouverture.

Dans d'autres filtres encore, les boîtes à vide sont équipées de pièces rigides dites d'usure ou de glissement, en téflon ou en polyéthylène haute densité ou tout autre matériau s'usant peu. Ces pièces rigides dites d'usure ou de glissement sont fixées de part et d'autre de l'ouverture de la boîte.

Un inconvénient de tous ces systèmes consiste dans le fait que par construction, il est difficile d'obtenir une coincidence parfaite entre les trous de la bande convoyeuse et l'ouverture de la boîte, si bien que les trous peuvent être plus ou moins obturés par les plaques de glissement de la boîte.

Le même inconvénient peut être dû au déplacement latéral de la bande convoyeuse.

Afin que les trous de la bande convoyeuse débouchent toujours dans l'ouverture de la boîte, on est conduit à donner à la boîte une ouverture assez grande pour tenir compte des tolérances de fabrication de la bande et de son plus ou moins grand déplacement latéral difficile à maîtriser.

Or, tout accroissement de l'ouverture de la boîte entraîne un accroissement de la force pressante due au vide et par conséquent des forces de friction.

Un autre inconvénient réside dans le fait que, si les bandes de friction sont solidaires de la bande convoyeuse par construction ou par collage, il est difficile de les remplacer quand elles sont usées.

Il existe également un inconvénient dans le système d'étanchéité constitué par deux bandes de friction non solidaires de la bande convoyeuse, mais entraînées par elles. Si on les remplace facilement en cas d'usure, par contre elles doivent être guidées par les pièces d'usure ou de glissement de la boîte afin de ne pas être aspirées par le vide. Les pièces d'usure ou de glissement de la boîte ont une section présentant un arrêtoir chargé de retenir la bande aspirée par le vide. Cet arrêtoir a une épaisseur plus faible que la bande de friction pour ne pas frotter contre la bande convoyeuse. Mais lorsque les pièces d'usure ou de glissement de la boîte présentent une usure avancée, cet arrêtoir peut venir en contact avec la bande convoyeuse et la détériorer.

Un autre inconvénient des dispositifs d'étanchéité à deux bandes de friction solidaires ou non de la bande convoyeuse réside dans l'impossibilité d'obtenir une étanchéité parfaite aux extrémités de la boîte à vide.

On connait aussi par FR-A-957-233 un filtre à bande dans lequel la bande convoyeuse est montée sur deux tambours fors, son entrainement étant assuré par une bande de traction qui glisse par sa face inférieure sur la boîte à vide et engage à friction la bande convoyeuse par sa face supérieure. Une telle solution convient lorsque le filtre est de dimensions modestes.

Au contraire, on réalisera l'ampleur des difficultés techniques rencontrées en raison des dimensions importantes que peuvent atteindre certains filtres à bande actuellement en service, dont la largeur de bande atteint quatre mètres, et la longueur trente mètres. On ne connaît à l'heure actuelle aucun moyen pour garantir que les bandes convoyeuses de telles dimensions soient d'une parfaite rectitude, et/ou que leurs trous d'évacuation soient parfaitement alignés, tant par construction qu'en fonctionnement sur des durées importantes atteignant plusieurs mois en utilisation continue.

La présente invention a précisément pour objet un système d'étanchéité entre bande convoyeuse et boîte collectrice qui répond à ce besoin.

A cet effet, elle propose un dispositif d'étanchéité conforme à l'objet de la revendication 1.

La description du dispositif se réfère aux dessins annexés dans lesquels:

La figure 1 est une coupe du dispositif de l'invention suivant la ligne I–I de la figure 5.

La figure 2 est une vue de dessus du dispositif de la figure 1 montrant une partie de chacun des éléments superposés

La figure 3 est une coupe du dispositif analogue à celle de la figure 1, mais dans laquelle la bande convoyeuse est décalée par rapport à la boîte à vide.

La figure 4 est une vue de dessus du dispositif de la figure 4 montrant une partie de chacun des éléments superposés, dans laquelle la bande convoyeuse est décalée par rapport à la boîte à vide.

La figure 5 est une vue latérale d'ensemble du dispositif.

La figure 6 est une coupe longitudinale partielle du dispositif.

La figure 7 est une vue en perspective d'un morceau de la bande de friction faisant partie du dispositif.

La figure 8 est une coupe simplifiée du dispositif suivant la ligne I–I de la figure 5 montrant l'action et la réaction dues au vide avec des nervures dans les cavités de la bande de friction.

La figure 9 est une coupe simplifiée du dispositif suivant la ligne I–I de la figure 5 montrant l'action et la réaction dues au vide sans la présence de nervures dans les cavités de la bande de friction, et

La figure 10 est une vue de détail, illustrant une variante de l'invention.

Dans la présentation d'ensemble latérale de la figure 5, le filtre à bande comprend une bande convoyeuse 4 sans fin, enroulée sur deux tambours 32, 33 à axe horizontal, l'un deux (32) étant entraîné par un moteur (non représenté) dans le sens de la flèche 34. La bande convoyeuse présente de ce fait un brin supérieur 4S le long duquel s'effectue la filtration, et un brin inférieur 4I sur le parcours duquel sont interposés des dispositifs annexes, notamment de tensionnement, qui ont été omis de la figure.

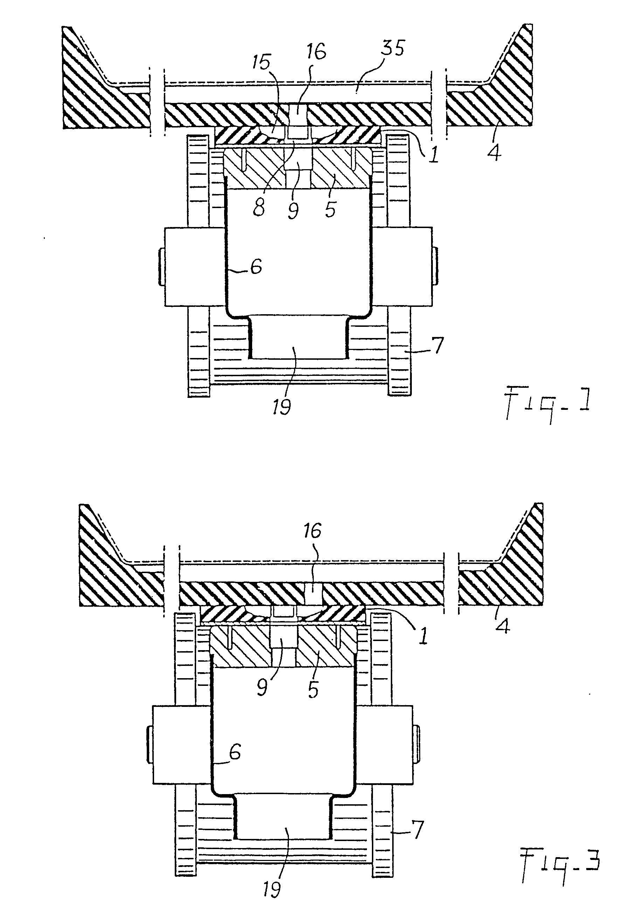

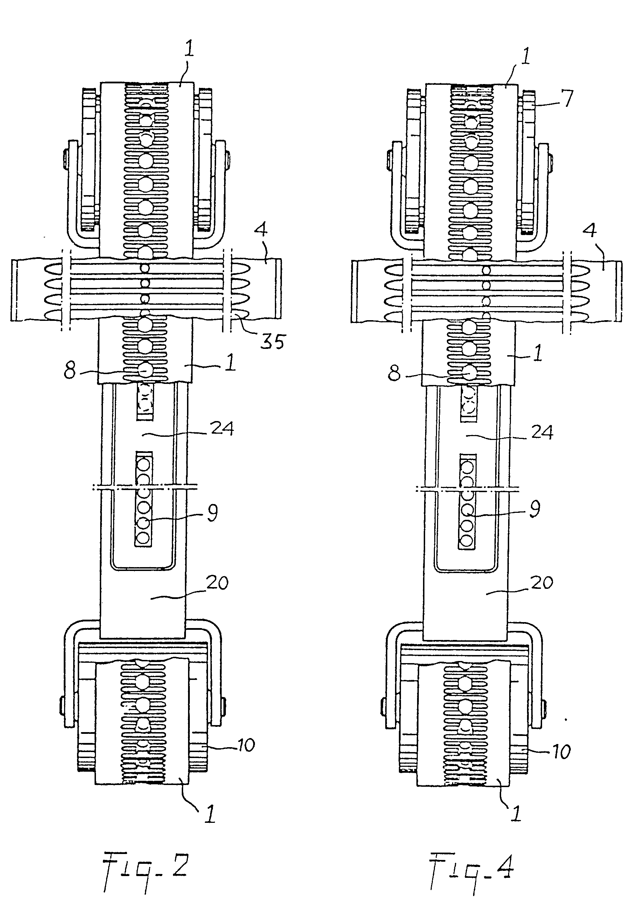

Comme illustré aux figures 1, 3, 8 et 9, la bande convoyeuse a une section en forme de U, son embase horizontale comportant des canaux transversaux 35 et des trous 16 d'évacuation perpendiculaires au centre de chaque canal.

Sur le brin supérieur 4S s'enroule une toile 36, ou autre média filtrant similaire, qui recouvre les canaux transversaux, et un distributeur 37 déverse sur la bande convoyeuse la préparation à filtrer.

Sur une partie du trajet horizontal du brin supérieur, la bande convoyeuse coulisse le long de la face supérieure d'une boîte collectrice sous vide 6. Cette boîte collectrice est dotée d'une ouverture longitudinale 9 ménagée dans une plaque de glissement 5 et la bande convoyeuse glisse le long de cette plaque de glissement par l'intermédiaire d'un dispositif d'étanchéité décrit ci-après.

Le dispositif d'étanchéité entre bande convoyeuse et boîte à vide faisant l'objet de l'invention consiste à utiliser une bande unique de friction non solidaire de la bande convoyeuse mais entraînée par elle et dont la conception permet un déplacement transversal de la bande convoyeuse par rapport à la boîte sans obturer le passage entre les trous d'évacuation des canaux de la bande convoyeuse et l'ouverture longitudinale de la boîte à vide. Il permet de réduire la largeur de l'ouverture de la boîte sous vide et par conséquent les forces de friction dues au vide.

Comme représenté en coupe sur la figure 7, cette bande de friction sans fin 1 est composée au moins de deux matériaux liés entre eux dont l'un (2) constitue la face en contact avec la bande convoyeuse 4 et l'autre (3) la face glissant sur la plaque de glissement 5 de la boîte 6. Le matériau en contact avec la bande convoyeuse est choisi pour avoir une bonne adhérence tandis que celui en contact avec la boîte est choisi pour avoir un bon coefficient de glissement et une bonne résistance à l'usure. Les deux matériaux sont suffisamment flexibles pour permettre à la bande de friction de s'enrouler.

Comme représenté par les figures 1, 2, 3, 4 et 5, une poulie à gorge 7 située à l'entrée de la boîte 6 fait coincider la bande de friction 1 avec la plaque de glissement 5 de la boîte 6 lorsqu'elle entre en contact avec elle. Les trous 8 de la bande de friction se superposent ainsi parfaitement avec l'ouverture 9 de la boîte. La boîte 6, parfaitement rectiligne, étant placée exactement dans la direction du déplacement de la bande convoyeuse 4 qui entraine la bande de friction 1, la superposition des trous 8 et de l'ouverture 9 est maintenue pendant tout le parcours.

Lorsque la bande de friction 1 quitte la bande convoyeuse 4 au bout de la boîte 6, elle entre en contact avec une autre poulie 10 qui limite le rayon de courbure admissible comme le fait également la poulie à gorge d'entrée 7.

La poulie à gorge d'entrée 7 et la poulie de sortie 10 solidaires de la boîte 6 tournent avec la bande de friction mais pourraient fort bien être remplacées par des guides fixes qui auraient le même profil et sur lesquels la bande de friction frotterait.

Le brin de retour 11 de la bande de friction 1 peut être supporté ou non par des galets 12 si la distance à parcourir est grande ou non. Il peut aussi être maintenue en tension par un galet 13 de tensionnement.

Une autre particularité du dispositif faisant l'objet de l'invention consiste à faire passer le brin de retour de la bande de friction dans une auge 14 remplie d'eau ou le liquide de régénération afin de la maintenir propre.

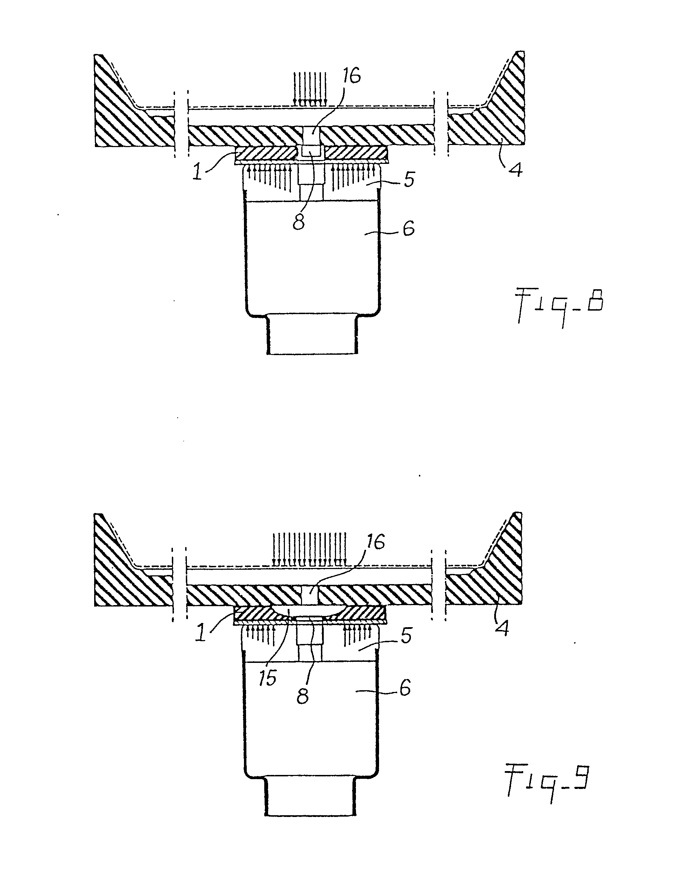

Comme représenté sur les figures 6 et 7, le matériau 2 de la bande de friction 1 en contact avec la bande convoyeuse 4 a une épaisseur suffisante pour contenir des cavités 15 au milieu desquelles sont percés les trous de communication 8 qui traversent également le matériau 3.

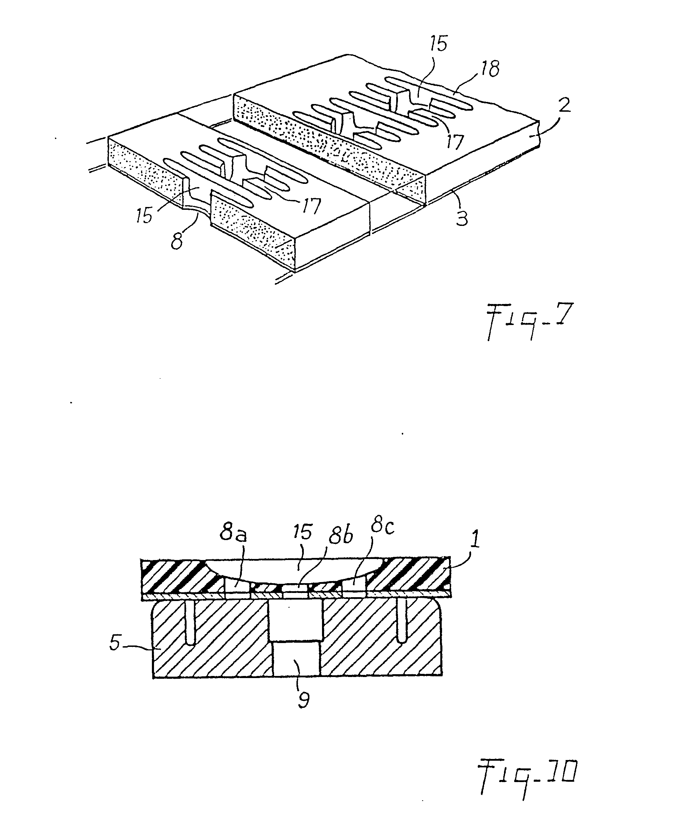

Ces cavités 15 créent un creux entre la bande convoyeuse et la boîte sous vide 6 plus large que les trous 16 de la bande convoyeuse 4. Comme le montre la figure 3, si les trous 16 de la bande convoyeuse ne sont pas parfaitement centrés ou si la bande convoyeuse 4 se déplace latéralement, ils restent en communication avec l'ouverture 9 de la boîte 6 par l'intermédiaire de ces cavités 15 et des trous de communication 8 de la bande de friction 1 guidée en permanence sur la boîte 6.

On peut donc donner à l'ouverture 9 de la boîte 6 une faible largeur sans craindre d'obturer les trous 16 de la bande convoyeuse comme ce serait le cas avec les systèmes traditionnels où la largeur de l'ouverture 9 de la boîte doit être plus grande pour tenir compte des déplacements latéraux de la bande convoyeuse ou des défauts de centrage de trous 16 par rapport à la bande convoyeuse.

Comme représenté sur les figures 1, 3 et 6, les trous 8 de la bande de friction 1 et les trous 16 de la bande convoyeuse ont des diamètre peu différents. Comme on le verra plus loin, les pas de perçage étant différents, les diamètres seront choisis pour que la bande de friction ne freine pas l'écoulement des fluides extraits de la bande. La largeur de l'ouverture 9 de la boîte 6, qui peut être aussi faible que possible, ne dépasse pas le diamètre des trous 8 de la bande de friction.

Selon la variante illustrée à la figure 10 la bande de friction 1 comporte plusieurs trous de communication 8a, 8b, 8c pour chaque cavité 15 et répartis sur la largeur de la cavité. Cette disposition permet d'assurer une comunication constante avec l'ouverture 9 de la boîte à vide même si la bande de friction se déplace latéralement et ceci sans augmenter la force d'application due au vide de la bande de friction 1 sur la plaque de glissement 5.

Un tel déplacement latéral pourrait en effet se produire dans des filtres de très grande taille avec des bandes de grande longueur. Il se pourrait alors que la direction suivie par la bande convoyeuse varie légèrement par rapport à la boîte fixe, et la bande de friction qui adhère à la bande convoyeuse risquerait de cette façon de ne pas se superposer parfaitement à la boîte sur tout son parcours.

Comme le montre la figure 7 en particulier, une autre caractéristique du dispositif consiste à séparer les cavités 15 de la bande de friction1 par des nervures transversales 17 et 18 au moins partielles qui font office de support intermédiaire entre la bande convoyeuse 4 et la plaque de glissement 5 de la boîte 6 dans laquelle est fait le vide par les orifices 19 représentés sur les figures 1, 3 et 5.

Sans la présence de ces nervures 17 et 18 et à cause du manque de rigidité de la bande de friction flexible 1, la bande convoyeuse 4 ne s'apuierait réellement sur la plaque 5 que de part et d'autre de la cavité 15 par l'intermédiaire de la partie pleine de la bande de friction 1 et elle supporterait en fait une charge due au vide sur toute la largeur de la cavite 15, comme représenté sur la figure 8.

Grâce à ces nervures 17 et 18, la bande convoyeuse 4 est appliqué directement sur toute la largeur des faces de la plaque de glissement 5 de la boîte 6 et supporte une charge due au vide seulement sur la largeur de l'ouverture 9 de la boîte 6, comme représenté par la figure 9.

Un autre avantage de la présence des nervures transversales 17 et 18 réside dans le fait que la bande de friction 1 renforce la bande convoyeuse 4 en son centre où elle est aspirée par l'ouverture 9 de la boîte sous vide 6 et là où elle est affaiblie par les trous 16.

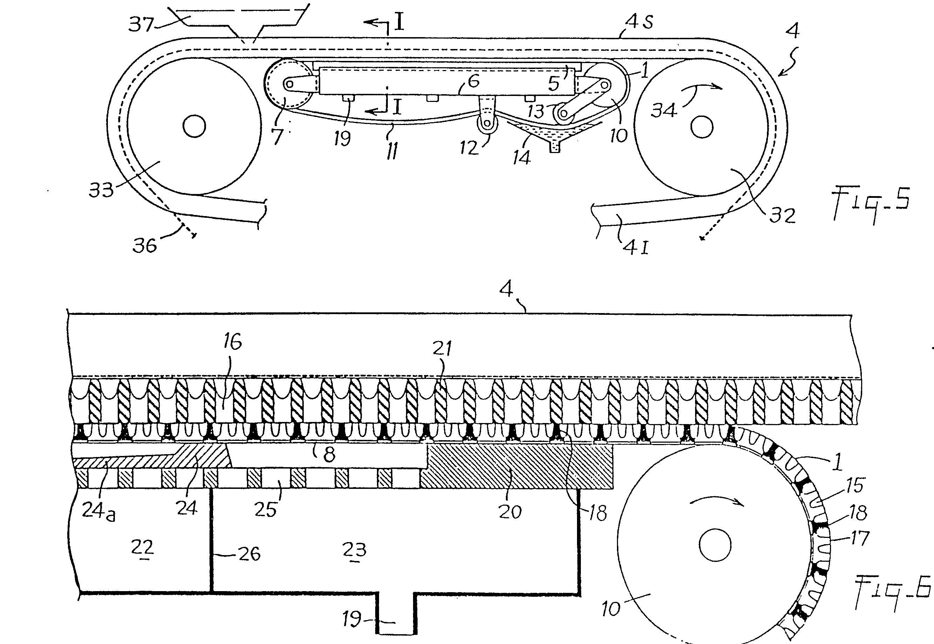

On remarquera sur les figures 2 et 4 et en particulier sur la figure 7 que les nervures ne sont pas toutes interrompues par les trous 8 de la bande de friction 1. Il existe entre chaque trou 8 au moins une nervure 18 qui reste pleine et entière sur toute la largeur. Ces nervures 18 interdisent l'entrée de l'air aux extrémités de la boîte en fermant la passage qui serait créé par les cavités 15 lorsque la bande de friction 1 quitte la bande convoyeuse 4.

Comme on peut le voir sur la figure 6, le pas des nervures 18, égal au pas de perçage des trous 8 de la bande de friction 1, est différent de celui des trous 16 de la bande convoyeuse 4 de façon que l'étanchéité entre la bande convoyeuse et les extrémités pleines 20 de la boîte soit toujours réalisée au moins par une nervure 18 en contact avec une partie pleine 21 de la bande convoyeuse 4.

De même, les extrémités de la plaque de glissement 5, qui limitent l'ouverture 9 de la boîte 6 comportent des zones pleines 20 suffisamment longues pour qu'il existe en toutes circonstances au moins une nervure 18 en contact par son sommet avec une partie pleine 21 de la bande convoyeuse entre deux de ses trous d'évacuation 16 consécutifs et également en contact par sa base avec les zones pleines 20 de la plaque de glissement.

En résumé, pour une bande convoyeuse donnée, le pas des trous de la bande de friction et la longueur des zones pleines de la plaque de glissement sont choisis pour que l'étanchéité en bout de boîte à vide soit toujours réalisée quelle que soit la position de la bande de friction par rapport à la bande convoyeuse.

Comme représenté figure 6, il en va de même pour réaliser l'étanchéité entre deux compartiments 22 et 23 de la boîte à vide dans lesquels on voudrait établir des vides différents. La plaque de glissement 5 est dotée dans ce cas de séparation 24 dont la longueur en contact avec la bande de friction 1 est suffisamment longue aussi, pour les mêmes raisons que précédemment.

Une autre particularité de ces séparations 24 propre au dispositif consiste à pouvoir les déplacer dans la plaque 5 afin de modifier à volonté la longueur des ouvertures 9. Pour ce faire, l'ouverture 9 de la plaque 5 est constituée par une rainure qui débouche dans la boîte 6 par des orifices 25 percés dans le fond. La séparation 24 qui a la même section que la rainure est pourvue d'une embase alongée 24a moins haute que la rainure et qui ferme les trous 25.

La séparation 24 permet ainsi de modifier les longueurs respectives des tronçons d'ouverture en communication avec chaque compartiment.

De cette façon lorsqu'on modifie les ouvertures 9 en déplaçant la séparation 24, les filtrats récoltés par les ouvertures sont toujours respectivement dirigés vers les compartiments 22 et 23 sans qu'il soit nécessaire de modifier la position de la cloison 26 fixe séparant les compartiments 22 et 23.

Avantageusement, on prévoira de réaliser la plaque de glissement d'une seule pièce et percée d'une ouverture longitudinale en son centre ce qui facilite son montage et son réglage sur le sommet de la boîte à vide.

Le dispositif d'étanchéité entre bande convoyeuse et boîte à vide décrit ci-dessus présente les avantages suivants:

1) Il permet un déplacement latéral de la bande convoyeuse par rapport à la boîte sans obstruer les trous d'évacuation des canaux de la bande convoyeuse.

2) Il permet de réduire la largeur de l'ouverture de la boîte sous vide et par conséquent les forces de friction dues au vide.

3) La réduction des forces de friction s'accompagne d'une réduction de la puissance consommée pour entraîner la bande convoyeuse et d'une réduction de l'usure des pièces en contact.

4) L'utilisation d'une bande unique de friction non solidaire de la bande convoyeuse élimine les inconvénients inhérents aux dispositifs comportant deux bandes de friction indépendantes.

5) L'utilisation d'une bande unique de friction selon le dispositif renforce la bande convoyeuse en son centre où elle est aspirée par le vide et où elle est affaiblie par les trous d'évacuation des canaux.

6) La conception du dispositif de l'invention permet aussi d'assurer l'étanchéité entre deux compartiments séparés de la boîte à vide et d'y établir ainsi des vides différents.

8) La conception du dispositif et plus particulièrement celle de la plaque de glissement de la boîte à vide permet de modifier la longueur des tronçons d'ouvertures en communication avec leurs compartiments respectifs sans changer de place les cloisons séparant les compartiments.

9) Le dispositif conforme à l'invention peut être adapté immédiatement à toute installation existante sans entraîner des modifications importantes ni d'immobilisation prolongée.

10) Lorsque l'usure de la bande de friction atteint son seuil de remplacement, l'immobilisation entraînée par le remplacement est de très courte durée (une heure environ pour une installation de la taille mentionnée en introduction).

11) Le dispositif de l'invention permet d'envisager la réalisation de filtres à bande d'une taille notablement supérieure aux tailles actuelles (longueur égale ou supérieure à 50 mètres).

## Revendications

1. Dispositif détanchéité entre une bande convoyeuse (4) et une boîte à vide (6) fixe d'un filtre à bande, comprenant une bande de friction unique (1), sans fin et non solidaire de la bande convoyeuse, cette dernière comportant des trous d'évacuation (16) ménagés sensiblement en son centre, et la bande de friction (1) comportant des cavités (15) pourvues de trous de communication (8) en correspondance avec une ouverture (9) supérieure de la boîte à vide, lesdites cavités ayant une largeur supérieure à celle des trous d'évacuation de la bande convoyeuse et étant séparées par des portions (18) de la bande de friction s'étendant sur toute la largeur de cette bande, caractérisé en ce que la bande de friction est entraînée par la bande convoyeuse et guidée par ladite boîte à vide, en ce que le pas des trous de communication (8) de la bande de friction est différent du pas des trous d'évacuation (16) de la bande convoyeuse, et que la boîte à vide (6) comporte une plaque de glissement (5) d'une seule pièce, au centre de laquelle est ménagée ladite ouverture (9), présentant à ses deux extrémités des zones pleines (2a) d'une longueur telle qu'à tout moment une des dites portions (18) de la bande de friction (1) soit en contact à la fois avec ladite zone pleine et avec la bande convoyeuse (4) entre deux de ses trous d'évacuation (16) consécutifs.

2. Dispositif selon la revendication 1, caractérisé en ce que ladite bande de friction (1) est réalisée en au moins deux matériaux (2, 3) différents, l'un présentant un coefficient de friction élevé vis à vis de la bande convoyeuse (4), et l'autre présentant un coefficient de friction et un taux d'usure faibles vis à vis de la boîte à vide (6).

3. Dispositif selon l'une à l'autre des revendications 1 et 2, caractérisé en ce que ladite bande de friction unique (1) est guidée par des poulies (7, 10) solidaires de la boîte (6), qui la maintiennent dans l'axe de celle-ci le long de son parcours.

4. Dispositif selon l'une à l'autre des revendications 1 et 3, caractérisé en ce que lesdites cavités (15) de la bande de friction (1) sont pourvues de nervures (17) au moins partielles formant support pour la bande convoyeuse (4) au niveau desdites cavités (15).

5. Dispositif selon l'une quelconque des revendications 1 à 4, caractérisé en ce que l'ouverture (9) de la plaque de glissement (5) consiste en une rainure longitudinale dont le fond comporte des orifices en communication avec la boîte à vide.

6. Dispositif selon la revendication 5, caractérisé en ce qu'il comporte des séparations mobiles (24), reçues dans ladite rainure et divisent ladite ouverture (9) en tronçons de longueurs réglables.

7. Dispositif selon la revendication 6, caractérisé en ce que ladite boîte à vide (6) est recoupée en compartiments par des cloisons fixes et que lesdites séparations mobiles (24) comportant une embase (24a) allongée, permettant de modifier les longueurs respectives des tronçons d'ouverture (9) en communication avec chaque compartiment.

8. Dispositif selon la revendication 7, caractérisé en ce que chaque séparation mobile (24) à une longueur telle qu'à tout moment une desdites portions (18) de la bande de friction (1) soit en contact à la fois avec ladite séparation (24) et avec la bande convoyeuse (4) entre deux de ses trous d'évacuation (16) consécutifs.

9. Dispositif selon l'une quelconque des revendications 1 à 8, caractérisé en ce que chaque cavité (15) comporte plusieurs trous (8a, 8b, 8c) de communication répartis sur la largeur de la cavité.

## Patentansprüche

1. Dichtvorrichtung zwischen einem Förderband (4) und einem festen Unterdruckbehälter (6) eines Bandfilters, umfassend ein einziges endloses Reibungsband (1), welches nicht mit dem Förderband verbunden ist, wobei letzteres im wesentlichen in der Mitte angeordnete Abzugsöffnungen (16) aufweist und wobei das Reibungsband (1) Austiefungen (15) mit Verbindungsöffnungen (8) umfasst, welche mit einer oberen Öffnung (9) des Unterdruckbehälters in Verbindung stehen, wobei die genannten Austiefungen eine grössere Breite aufweisen als die Abzugsöffnungen des Förderbandes und durch Bereiche (18) des Reibungsbandes (1) voneinander getrennt sind, die sich über die gesamte Breite dieses Bandes erstrecken, dadurch gekennzeichnet, dass das Reibungsband von dem Förderband mitgenommen und von dem Unterdruckbehälter geführt wird, dass der Gangabstand der Verbindungsöffnungen (8) des Reibungsbandes ein anderer ist als der Gangabstand der Abzugsöffnungen (16) des Förderbandes und dass der Unterdruckbehälter (6) eine einstückige Gleitplatte (5) aufweist, in deren Mitte die genannte Öffnung (9) vorgesehen ist und deren Enden durchgehende Zonen (2a) einer Länge dergestalt aufweisen, dass jederzeit einer der genannten Bereiche (18) des Reibungsbandes (1) gleichzeitig mit der durchgehenden Zone und mit dem Förderband (4) zwischen zwei seiner aufeinanderfolgenden Abzugsöffnungen (16) in Berührung steht.

2. Vorrichtung nach Anspruch 1, dadurch gekennzeichnet, dass das Reibungsband (1) aus mindestens zwei verschiedenen Materialien (2, 3) besteht, von denen das eine einen gegenüber dem Förderband (4) erhöhten Reibungskoeffizienten und das andere einen gegenüber dem Unterdruckbehälter geringen Reibungskoeffizienten sowie eine geringe Verschleissrate aufweist.

3. Vorrichtung nach einem der Ansprüche 1 und 2, dadurch gekennzeichnet, dass das einzige Reibungsband (1) durch mit dem Unterdruckbehälter (6) verbundene Rollen (7, 10) geführt ist, welche dieses während des Durchlaufs auf dessen Achse halten.

4. Vorrichtung nach einem der Ansprüche 1 und 3, dadurch gekennzeichnet, dass die Austiefungen (15) des Reibungsbandes (1) zumindest teilweise mit Rippen (17) zur Abstützung des Förderbandes (4) auf der Höhe der genannten Austiefungen (15) versehen sind.

5. Vorrichtung nach einem der Ansprüche 1 bis 4, dadurch gekennzeichnet, dass die Öffnung (9) der Gleitplatte (5) aus einer Längsnut mit Öffnungen an deren Boden zur Verbindung mit dem Unterdruckbehälter besteht.

6. Vorrichtung nach Anspruch 5, dadurch gekennzeichnet, dass diese bewegliche Trennstücke (24) aufweist, welche in der genannten Nut angeordnet sind und die Öffnung (9) in Abschnitte einstellbarer Längen unterteilt.

7. Vorrichtung nach Anspruch 6, dadurch gekennzeichnet, dass der Unterdruckbehälter (6) durch feste Trennwände in Kammern unterteilt ist und dass die genannten beweglichen Trennstücke (24) einen verlängerten Basisfortsatz (24a) zur Modifizierung der jeweiligen Längen der mit jeder Kammer in Verbindung stehenden Öffnungsabschnitte (9) aufweist.

8. Vorrichtung nach Anspruch 7, dadurch gekennzeichnet, dass jedes der beweglichen Trennstücke (24) eine Länge dergestalt aufweist, dass jederzeit einer der Bereiche (18) des Reibungsbandes (1) gleichzeitig mit dem Trennstück (24) und mit dem Förderband (4) zwischen zwei von dessen aufeinanderfolgenden Abzugsöffnungen (16) in Verbindung steht.

9. Vorrichtung nach einem der Ansprüche 1 bis 8, dadurch gekennzeichnet, dass jede Austiefung (15) mehrere über ihre Breite verteilte Bohrungen (8a, 8b, 8c) aufweist.

**Claims**

1. Tightness device between a conveyor belt (4) and a fixed vacuum box (6) in a belt filter, comprising a single endless friction belt (1), which is not integral with the conveyor belt, the latter comprising discharge holes (16) provided substantially in its center, and the friction belt (1) comprising cavities (15) provided with communications apertures (8) which correspond with an upper opening (9) of the vacuum box, said cavities being wider than the discharge holes of the conveyor belt and being separated by portions (18) of the friction belt extending through the width of said belt, characterized in that the friction belt is driven by the conveyor belt and guided by said vacuum box, in that the pitch of the communication apertures (8) of the friction belt is different from the pitch of the discharge holes (16) of the conveyor belt, and that the vacuum box (6) comprises a one-piece sliding plate (5), in the center of which is provided said opening (9) and presenting at its two ends solid zones (2a) of such length that at any moment one of said portions (18) of the friction belt (1) is in contact both with said solid zone and with the conveyor belt (4) between two of its consecutive discharge holes (16).

2. Device according to claim 1, characterized in that said friction belt (1) is produced from at least two different materials (2, 3), one having a high friction coefficient with respect to the conveyor belt (4), and the other having a low friction coefficient and low wearing rate with respect to the vacuum box.

3. Device according to any one of claims 1 and 2, characterized in that said single friction belt (1) is guided b pulleys (7, 10) fixedly mounted on the box (6), keeping said belt moving along the axis of said box.

4. Device according to any one of claims 1 and 3, characterized in that said cavities (15) in the friction belt (1) are provided with at least partial ribs (17) forming a support for the conveyor belt (4) at the level of said cavities (15).

5. Device according to any one of claims 1 to 4, characterized in that the opening (9) of the sliding plate (5) consists in a longitudinal groove of which the bottom comprises orifices in communication with the vacuum box.

6. Device according to claim 5, characterized in that it comprises movable partitions (24) which are received in said groove and divide said opening (9) into sections of adjustable length.

7. Device according to claim 6, characterized in that said vacuum box (6) is divided into compartments by fixed partitions and said movable partitions (24) comprise an elongated base (24a) permitting the modification of the respective lengths of the opening sections (9) communicating with each compartment.

8. Device according to claim 7, characterized in that the length of each movable partition (24) is such that there is always one of said portions (18) of the friction belt (1) in contact with both said movable partition (24) and the conveyor belt (4) between two of its consecutive discharge holes (16).

9. Device according to any one of claims 1 to 8, characterized in that each cavity (15) comprises a plurality of communication apertures (8a, 8b, 8c) distributed throughout the width of said cavity.

Fig-1

Fig-3

Fig. 2

Fig. 4

3/5

Fig.5

Fig.6

4/5

15

18

2

17

15

17

8

3

Fig-7

8a   15  8b   8c

1

5

9

Fig-10

Fig-8

Fig-9